# FASCICULE DE BREVET EUROPEEN

(11) **EP 1 978 849 B1**
(45) Date de publication et mention de la délivrance du brevet: **03.11.2010**
(21) Numéro de dépôt: 07730907.8
(22) Date de dépôt: 01.02.2007
(51) Int. Cl.: A47J 27/04

(54) **ELEMENT DE CUISSON APPARTENANT A UN ENSEMBLE POUR LA CUISSON A LA VAPEUR COMPORTANT UN ORGANE DE PREHENSION EXTERIEUR**
KOCHELEMENT FÜR EIN DAMPFKOCHSET MIT AUSSENGRIFFTEIL
COOKING ELEMENT BELONGING TO A STEAM COOKING SET COMPRISING AN OUTER GRIP MEMBER

(30) Priorité: 03.02.2006 FR 0600994
(43) Date de publication de la demande: 15.10.2008
(73) Titulaire: SEB S.A., 69130 Ecully (FR)
(72) Inventeur: DUMOUX, Philippe, F-21120 GEMEAUX (FR)
(74) Mandataire: Kiehl, Hubert
(86) Numéro de dépôt international: PCT/FR2007/000191
(87) Numéro de publication internationale: WO 2007/088283

(56) Documents cités:
- EP-A- 0 839 485
- DE-U1- 20 010 680
- US-A- 5 235 904

## Description

La présente invention concerne le domaine technique des appareils et des ustensiles de cuisson à la vapeur, ou cuiseurs vapeur.

Les cuiseurs vapeur comprennent usuellement un réservoir d'eau, un ou plusieurs éléments de cuisson prévus pour recevoir les aliments à cuire, et le cas échéant des moyens de chauffe pour la production de vapeur. Le réservoir d'eau peut être disposé dans une base de production de vapeur.

Il est connu du document US 4 401 017 un ensemble pour la cuisson à la vapeur, comportant un élément de cuisson présentant une paroi latérale annulaire dégageant une ouverture supérieure, et un panier de cuisson disposé dans l'élément de cuisson. L'élément de cuisson forme un réservoir d'eau et est fermé par un couvercle. Des éléments de préhension sont montés sur le panier de cuisson. Les éléments de préhension sont formés par deux anses pivotantes.

Toutefois les éléments de préhension du panier de cuisson présentent des organes de préhension restant dans l'élément de cuisson lorsque le panier de cuisson est disposé dans l'élément de cuisson. De ce fait, l'utilisateur doit se saisir avec précaution des organes de préhension exposés à la vapeur.

Le document DE 2 00 10 680 U divulgue un ensemble pour la cuisson à la vapeur selon le préambule de la revendication 1.

Un objet de la présente invention est de proposer un ensemble pour la cuisson à la vapeur, dans lequel le retrait d'un panier de cuisson ou d'un accessoire interne de cuisson disposé dans un élément de cuisson est facilité.

Un autre objet de la présente invention est de proposer un ensemble pour la cuisson à la vapeur, dans lequel les échappements de vapeur à l'extérieur dudit ensemble sont contrôlés.

Ces objets sont atteints avec un ensemble pour la cuisson à la vapeur selon les caractéristiques de la revendication 1. Ces dispositions permettent à l'utilisateur de retirer le panier de cuisson ou l'accessoire interne de cuisson sans précautions particulières. L'organe de préhension resté en dehors de l'élément de cuisson n'est pas directement exposé à la vapeur ou à la condensation. L'utilisateur peut donc saisir l'élément de préhension plus facilement.

Avantageusement alors, l'élément d'obturation est agencé dans une gorge du bord supérieur annulaire de la paroi latérale annulaire. Cette disposition permet de protéger l'élément d'obturation. Une ou plusieurs encoches peuvent alors être avantageusement ménagées dans chacune des parois de la gorge.

Avantageusement alors l'élément d'obturation est formé par une languette élastique présentant une zone d'appui intermédiaire avec l'élément de cuisson.

Avantageusement encore la languette élastique est associée à une pièce ressort. Pour des considérations pratiques, la languette élastique peut être formée par une pièce moulée en matière plastique. L'élasticité d'une telle pièce peut s'altérer sous l'effet de la chaleur, de l'humidité et des contraintes. C'est pourquoi l'utilisation d'une pièce ressort, notamment métallique, est préférée.

Avantageusement encore, le bord supérieur annulaire comporte au moins une autre encoche prévue pour le passage d'un autre élément de préhension appartenant à un autre panier de cuisson ou à l'accessoire interne de cuisson disposé dans l'élément de cuisson, des éléments d'obturations étant montés sur l'élément de cuisson en regard d'au moins une partie de ladite ou desdites autres encoches.

Avantageusement alors, l'autre panier de cuisson est disposé dans l'élément de cuisson à côté du panier de cuisson. Cette disposition permet d'éviter la retombée de jus de cuisson sur les aliments à cuire rencontrée dans les cuiseurs vapeur étagés, tout en conservant une construction simple.

Ces objets sont atteints aussi avec un ensemble pour la cuisson à la vapeur selon les caractéristiques de la revendication 8. Les organes de contrôle d'échappement de vapeur peuvent notamment servir à dévier la vapeur susceptible de s'échapper de la ou des encoches. Les organes de contrôle d'échappement de vapeur peuvent notamment servir à boucher le ou les passages ménagés par la ou les encoches, directement ou indirectement en favorisant la condensation de la vapeur.

Avantageusement alors, le ou les organes de contrôle d'échappement de vapeur sont disposés à l'extérieur de l'élément de cuisson lorsque le panier de cuisson ou l'accessoire interne de cuisson est agencé dans l'élément de cuisson. Une telle disposition offre plus de possibilités de contrôle de l'échappement de la vapeur, et permet un meilleur résultat.

Avantageusement encore, le ou les organes de contrôle d'échappement de vapeur sont issus de l'organe de préhension. La construction de l'élément de préhension peut ainsi être simplifiée.

Avantageusement encore l'élément de préhension est monté pivotant sur le panier de cuisson ou sur l'accessoire interne de cuisson. Cette disposition facilite la manipulation du panier de cuisson ou de l'accessoire interne de cuisson hors de l'élément de cuisson. L'élément de préhension est rabattu pour la phase de cuisson et est relevé pour le déplacement du panier de cuisson ou de l'accessoire interne de cuisson. Cette disposition facilite également l'agencement côte à côte de plusieurs paniers de cuisson et/ou accessoires internes de cuisson dans le même élément de cuisson. Si désiré, plusieurs éléments de préhension peuvent être montés pivotants sur le panier de cuisson ou sur l'accessoire interne de cuisson.

Avantageusement encore l'élément de préhension comporte deux bras s'étendant hors de l'élément de cuisson lorsque le panier de cuisson ou l'accessoire interne de cuisson est agencé dans l'élément de cuisson. Cette disposition simplifie le montage de l'élément de préhension en permettant une meilleure répartition des efforts.

Avantageusement alors les deux bras sont reliés par l'organe de préhension. Cette disposition simplifie encore davantage le montage de l'élément de préhension.

Avantageusement alors, les deux bras prennent appui sur la languette élastique de part et d'autre de la zone d'appui intermédiaire. Cette disposition permet de simplifier le montage de l'élément d'obturation.

Ces objets sont également atteints avec un ensemble pour la cuisson à la vapeur selon les caractéristiques de la revendication 15.

Cette disposition facilite la manipulation du panier de cuisson ou de l'accessoire interne de cuisson hors de l'élément de cuisson. L'élément de préhension est rabattu pour la phase de cuisson et est relevé pour le déplacement du panier de cuisson ou de l'accessoire interne de cuisson. Cette disposition facilite également l'agencement côte à côte de plusieurs paniers de cuisson et/ou accessoires internes de cuisson dans le même élément de cuisson. Si désiré, plusieurs éléments de préhension peuvent être montés pivotants sur le panier de cuisson ou sur l'accessoire interne de cuisson.

Selon une construction avantageuse, l'élément de cuisson présente une partie inférieure permettant le passage de la vapeur issue par exemple d'une base de production de vapeur sur laquelle est disposé l'élément de cuisson. Toutefois, l'invention concerne également un élément de cuisson dans lequel de l'eau est transformée en vapeur, cet élément de cuisson pouvant comporter ou non des moyens de chauffe de l'eau.

Selon une construction avantageuse, le panier de cuisson ou l'accessoire interne de cuisson est ajouré. Toutefois, l'invention concerne également un panier de cuisson ou un accessoire interne de cuisson non ajouré.

Avantageusement encore, l'ensemble pour la cuisson à la vapeur comporte un élément d'enceinte supérieur disposé sur l'élément de cuisson, la partie inférieure dudit élément d'enceinte supérieur étant agencée en regard de la partie supérieure de l'encoche laissée libre par l'élément de préhension lorsque le panier de cuisson ou l'accessoire interne de cuisson est agencé dans l'élément de cuisson. Cette disposition permet d'éviter la présence d'encoches sur la partie inférieure de l'élément d'enceinte supérieur.

Ledit ensemble pour la cuisson à la vapeur peut notamment appartenir à un cuiseur vapeur électrique comprenant une base de production de vapeur, un élément de cuisson, un panier de cuisson ou un accessoire interne de cuisson, et un élément d'enceinte supérieur selon la caractéristique précitée.

L'invention sera mieux comprise à l'étude de deux exemples de réalisation et d'une variante, pris à titre nullement limitatif, illustrés dans les figures annexées, dans lesquelles :
- la figure 1 est une vue en éclaté d'un exemple de réalisation d'un cuiseur vapeur comportant un ensemble pour la cuisson à la vapeur selon l'invention,
- la figure 2 est une vue en perspective du cuiseur vapeur illustré à la figure 1,
- la figure 3 est une vue en perspective d'un panier de cuisson appartenant à l'ensemble pour la cuisson à la vapeur selon l'invention illustré aux figures 1 et 2,
- les figures 4 et 5 sont des vues en perspective d'un élément de cuisson appartenant à l'ensemble pour la cuisson à la vapeur selon l'invention illustré aux figures 1 et 2,
- les figures 6 et 7 illustrent un élément d'obturation prévu pour être monté dans l'élément de cuisson illustré aux figures 4 et 5,
- les figures 8 et 9 illustrent une variante de réalisation d'un élément d'obturation prévu pour être monté dans l'élément de cuisson illustré aux figures 4 et 5,
- la figure 10 illustre un détail de l'élément de cuisson illustré aux figures 4 et 5,
- la figure 11 illustre un détail de l'élément de cuisson illustré aux figures 4 et 5, muni de l'élément d'obturation illustré aux figures 6 et 7 et recevant le panier de cuisson illustré à la figure 3,
- la figure 12 est une vue schématique en coupe du bord supérieur de l'élément de cuisson illustré aux figures 4, 5 et 10, au niveau d'une échancrure de passage d'un élément de préhension du panier de cuisson illustré à la figure 3,
- la figure 13 est une vue schématique en coupe du bord supérieur de l'élément de cuisson illustré aux figures 4, 5 et 10, recevant un élément de préhension d'un panier de cuisson illustré à la figure 3,
- la figure 14 est une vue schématique en coupe du bord supérieur de l'élément de cuisson illustré aux figures 4, 5 et 10, sur lequel est disposé un couvercle,
- la figure 15 est une vue schématique en coupe du bord supérieur de l'élément de cuisson illustré aux figures 4; 5 et 10, recevant un élément de préhension d'un panier de cuisson illustré à la figure 3, et sur lequel est disposé un couvercle
- la figue 16 est une vue en perspective d'un accessoire interne de cuisson susceptible d'être mis en place dans l'élément de cuisson illustré aux figures 4 et 5,
- la figure 17 est une vue en perspective de l'élément de cuisson illustré aux figures 4 et 5 recevant l'accessoire interne de cuisson illustré à la figure 16.

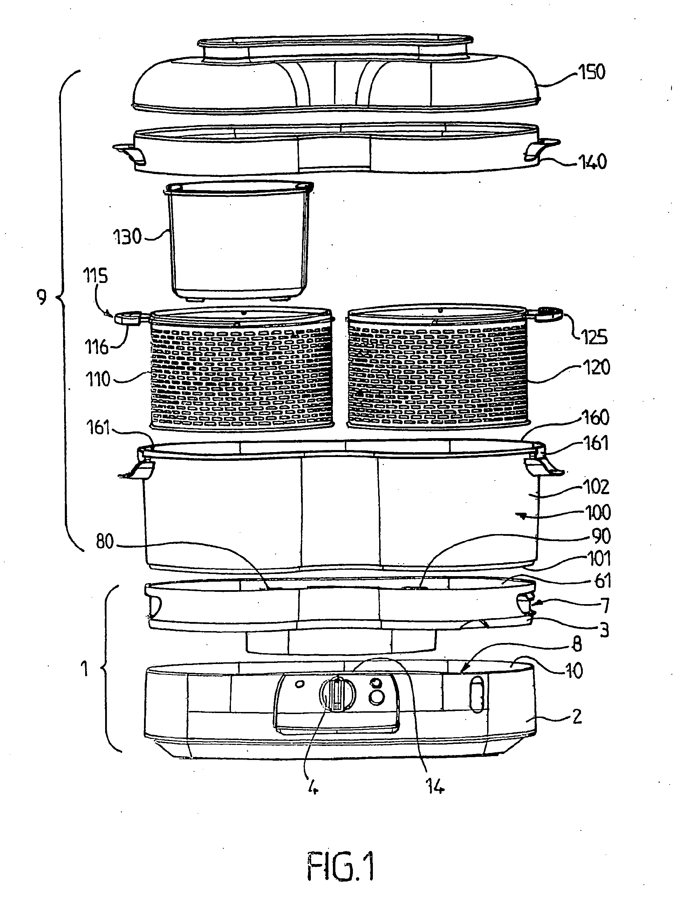

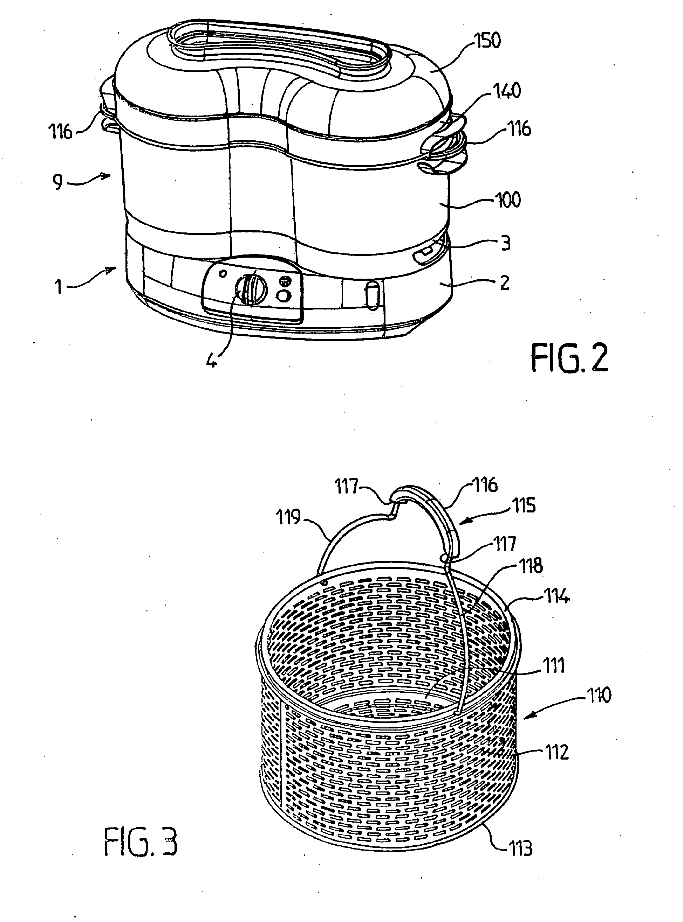

Les figures 1 et 2 montrent un cuiseur vapeur électrique comprenant une base de production de vapeur 1 et une enceinte de cuisson 9 alimentée en vapeur par la base de production de vapeur 1. L'enceinte de cuisson 9 est disposée sur la base de production de vapeur 1.

La base de production de vapeur 1 comporte un réservoir d'eau 8 et un dispositif de chauffe (non visible sur les figures). Le réservoir d'eau 8 est constitué par un réceptacle 10 formé dans un élément inférieur 2 de la base de production de vapeur 1. L'élément inférieur 2 comporte des moyens de commande 4 prévus pour piloter le dispositif de chauffe, notamment pour régler le temps de cuisson et/ou le temps de maintien au chaud. Le réceptacle 10 comporte une paroi latérale comportant un bossage latéral interne 14. Les moyens de commande 4 sont agencés à l'extérieur du bossage latéral interne 14. La base de production de vapeur 1 comporte également un élément supérieur 3 agencé sur l'élément inférieur 2. L'élément supérieur 3 forme un bac récupérateur à jus 61. L'élément supérieur 3 présente un dispositif de remplissage 7.

L'enceinte de cuisson 9 comporte un élément de cuisson 100, disposé sur la base de production de vapeur 1, un panier de cuisson 110 disposé dans l'élément de cuisson 100, un autre panier de cuisson 120 disposé dans l'élément de cuisson 100 à côté du panier de cuisson 110, un bol à riz 130, disposé dans l'élément de cuisson 100 ou dans le panier de cuisson 110 ou dans l'autre panier de cuisson 120, un accessoire de cuisson 140, disposé au dessus de l'élément de cuisson 100, et un couvercle 150, disposé sur l'accessoire de cuisson 140 ou directement sur l'élément de cuisson 100.

Le panier de cuisson 110, mieux visible sur la figure 3, et l'autre panier de cuisson 120, visible sur la figure 1, présentent avantageusement un positionnement interchangeable dans l'élément de cuisson 100, et sont avantageusement identiques. Le panier de cuisson 110 et l'autre panier de cuisson 120 sont ajourés.

Le panier de cuisson 110 comporte un fond 111 et une paroi latérale 112 avantageusement réalisés en tôle d'acier inoxydable perforée et assemblés par un surmoulage annulaire de matière plastique 113. Un autre surmoulage annulaire de matière plastique 114 est prévu sur le bord supérieur de la paroi latérale 112. A titre de variante, le fond 111 et la paroi latérale 112 peuvent notamment être assemblés par sertissage ; le bord supérieur de la paroi latérale 112 peut être retourné.

Un élément de préhension 115 est monté sur le panier de cuisson 110. Plus particulièrement, l'élément de préhension 115 est monté pivotant sur le panier de cuisson 110. L'élément de préhension 115 est par exemple réalisé en acier inoxydable.

L'élément de préhension 115 comporte un organe de préhension 116 agencé à l'extérieur de l'enceinte de cuisson 9 lorsque le panier de cuisson 110 est disposé dans l'élément de cuisson 100, tel que visible sur la figure 2. L'organe de préhension 116 peut notamment être réalisé en matière plastique; par exemple en polypropylène.

L'élément de préhension 115 comporte deux bras 118, 119 s'étendant hors de l'élément de cuisson 100 lorsque le panier de cuisson 110 est agencé dans l'élément de cuisson 100. Les deux bras 118, 119 sont reliés par l'organe de préhension 116.

Un autre élément de préhension 125 est monté sur l'autre panier de cuisson 120. L'autre élément de préhension 125 est identique à l'élément de préhension 115.

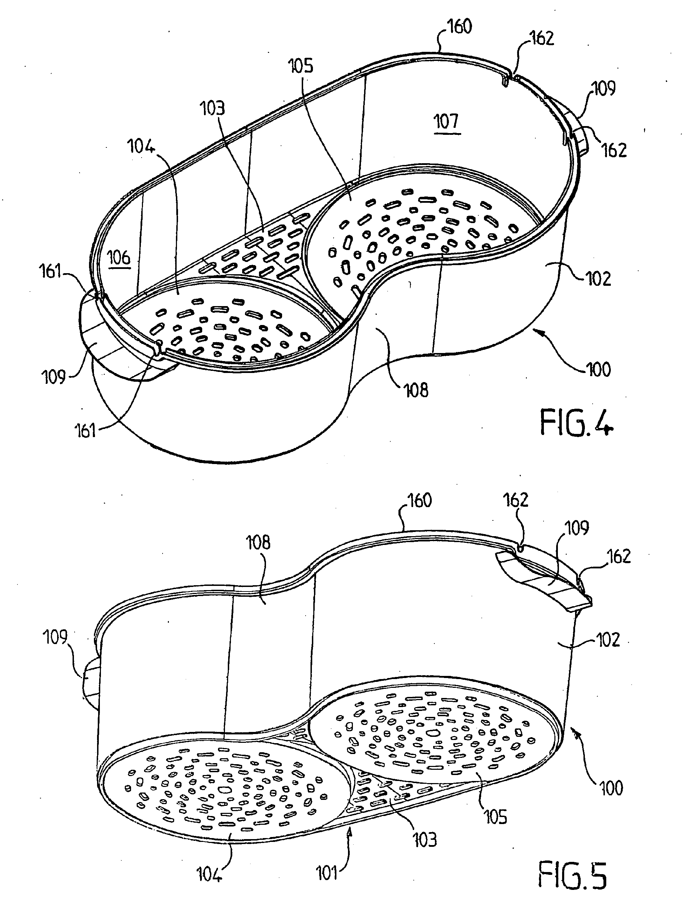

Tel que mieux visible sur les figures 4 et 5, l'élément de cuisson 100 présente une partie inférieure 101 permettant le passage de la vapeur et une paroi latérale annulaire 102 dégageant une ouverture supérieure. L'élément de cuisson 100 présente une géométrie allongée. Un organe de préhension 109 est disposé à chacune des extrémités de l'élément de cuisson 100.

L'élément de cuisson 100 comporte un fond perforé 103. Le fond perforé 103 et la paroi latérale annulaire 102 sont de préférence issus d'une même pièce, réalisée avantageusement en matière transparente ou translucide. A titre de variante, l'élément de cuisson 100 pourrait notamment comporter un fond perforé amovible.

La partie inférieure 101 présente une conformation 104 prévue pour recevoir le panier de cuisson 110 et une autre conformation 105 prévue pour recevoir l'autre panier de cuisson 120. La conformation 104 et l'autre conformation 105 forment chacune une dépression permettant de faciliter le positionnement du panier de cuisson 110 ou de l'autre panier de cuisson 120. La conformation 104 et l'autre conformation 105 sont ménagées dans le fond perforé 103.

La paroi latérale annulaire 102 définit une zone de réception 106 prévue pour recevoir le panier de cuisson 110 et une autre zone de réception 107 prévue pour recevoir l'autre panier de cuisson 120. La zone de réception 106 et l'autre zone de réception 107 sont adjacentes.

Un renfoncement latéral 108 est ménagé sur toute la hauteur de la paroi latérale annulaire 102. Le renfoncement latéral 108 est ménagé entre la zone de réception 106 et l'autre zone de réception 107.

Tel que visible sur les figures 1 et 2, les moyens de commande 4 sont agencés en dessous du renfoncement latéral 108.

De préférence, la base de production de vapeur 1 comporte au moins une sortie de vapeur 80 disposée sous le panier de cuisson 110 et au moins une autre sortie de vapeur 90 disposée sous l'autre panier de cuisson 120, tel qu'illustré à la figure 1.

L'ensemble pour la cuisson à la vapeur selon l'invention comporte le panier de cuisson 110 disposé dans l'élément de cuisson 100. La paroi latérale annulaire 102 présente un bord supérieur annulaire 160 comportant deux encoches 161 prévues pour le passage de l'élément de préhension 115 et deux autres encoches 162 prévues pour le passage de l'autre élément de préhension 125. Les autres encoches 162 sont identiques aux encoches 161.

L'élément de préhension 115 comporte des organes de contrôle d'échappement de vapeur 117, visibles sur la figure 3, disposés en regard des encoches 161 lorsque le panier de cuisson 110 est agencé dans l'élément de cuisson 100, tel que représenté à la figure 2. Les organes de contrôle d'échappement de vapeur 117 sont disposés à l'extérieur de l'élément de cuisson 100 lorsque le panier de cuisson 110 est agencé dans l'élément de cuisson 100, tel que représenté à la figure 2. Les organes de contrôle d'échappement de vapeur 117 sont issus de l'organe de préhension 116, tel que visible sur la figure 3. Plus particulièrement, les organes de contrôle d'échappement de vapeur 117 sont formés par les extrémités de l'organe de préhension 116.

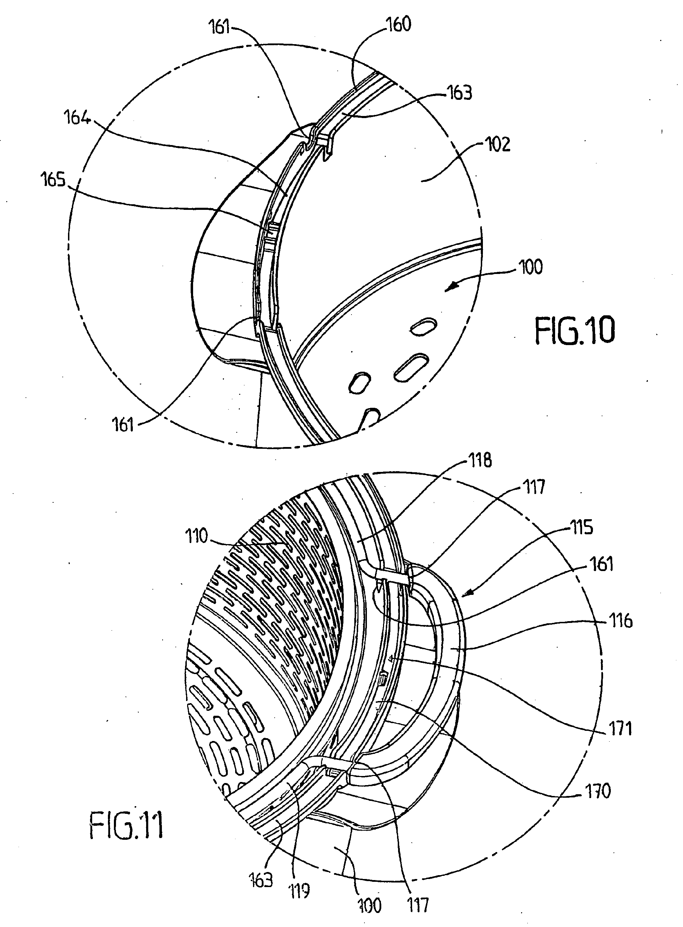

Des éléments d'obturation 171 sont montés sur l'élément de cuisson 100 en regard d'au moins une partie des encoches 161, 162. Les éléments d'obturation 171 sont agencés dans une gorge 163 du bord supérieur annulaire 160 de la paroi latérale annulaire 102 de l'élément de cuisson 100, bien visible sur la figure 10.

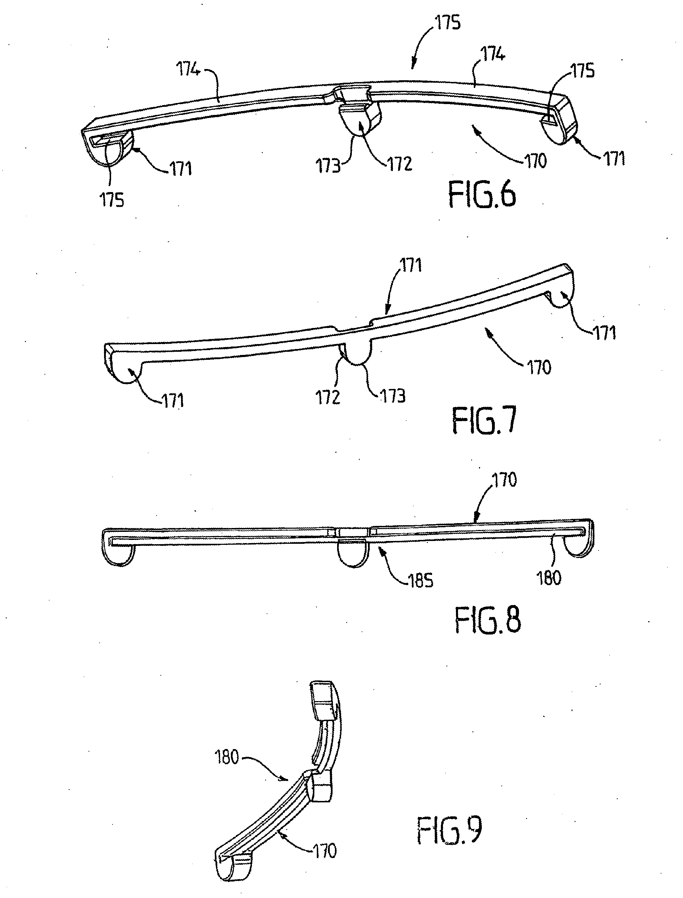

Les éléments d'obturation 171 sont formés par une languette élastique 170 illustrée aux figures 6 et 7. La languette élastique 170 présente une zone d'appui intermédiaire 172 avec l'élément de cuisson 100. La zone d'appui intermédiaire présente avantageusement une base 173 arrondie. Deux parties flexibles 174 s'étendent à partir de la zone d'appui intermédiaire 172. Les éléments d'obturation 171 sont issus des extrémités libres des parties flexibles 174. La languette élastique 170 forme un moyen de rappel élastique 175 pour les éléments d'obturation 171.

A titre de variante illustrée aux figures 8 et 9, la languette élastique 170 est associée à une pièce ressort 180. A cet effet la languette élastique 170 présente des portions de logement longitudinal 175 au niveau des éléments d'obturation 171 et de la zone d'appui intermédiaire 172. La pièce ressort 180 forme alors un moyen de rappel élastique 185 pour les éléments d'obturation 171.

Tel que visible sur la figure 10, la gorge 163 présente un renfoncement 164 s'étendant d'une des encoches 161 à l'autre. Un support de pivotement 165 est ménagé dans la gorge 163 pour recevoir la zone d'appui intermédiaire 172.

La figure 11 illustre la languette élastique 170 en place dans la gorge 163. Le panier de cuisson 110 est présent dans l'élément de cuisson 100. L'élément de préhension 115 est rabattu. Les bras 118, 119 viennent au contact de la languette élastique 170.

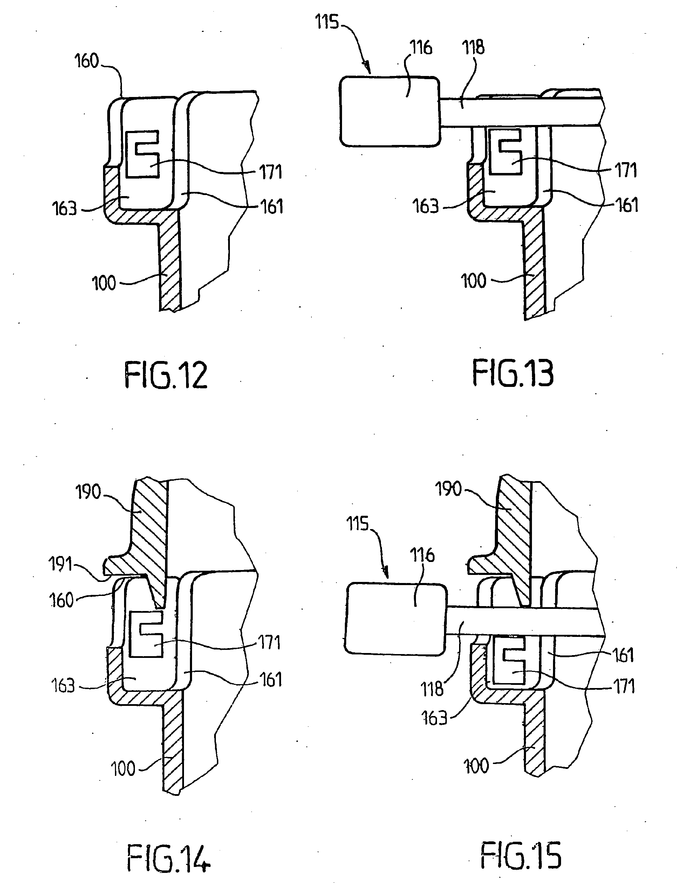

L'ensemble pour la cuisson à la vapeur selon l'invention peut comporter, outre l'élément de cuisson 100 et le panier de cuisson 110 avec l'élément de préhension 115, un élément d'enceinte supérieur 190, représenté aux figures 14 et 15. L'élément d'enceinte supérieur 190 est disposé sur l'élément de cuisson 100. L'élément d'enceinte supérieur 190 est par exemple formé par l'accessoire de cuisson 140 ou par le couvercle 150.

Le fonctionnement de l'ensemble pour la cuisson à la vapeur selon l'invention va être expliqué en référence aux figures 12 à 15.

La figure 12 montre un des éléments d'obturation 171 agencé en regard de l'une des encoches 161. La languette élastique 170 agencée dans la gorgé 163 est alors au repos.

La figure 13 montre un des bras 118 de l'élément de préhension 115 occupant une position correspondant à celle de la figure 11. La languette élastique 170 agencée dans la gorge 163 est encore au repos.

La figure 14 montre l'élément d'enceinte supérieur 190 en place sur l'élément de cuisson 100 en l'absence du panier de cuisson 110 et de l'élément de préhension 115. La languette élastique 170 agencée dans la gorge 163 est encore au repos. Un rebord inférieur 191 de l'élément d'enceinte supérieur 190 repose sur le bord supérieur annulaire 160 de l'élément de cuisson 100. L'élément d'obturation 171 obture le passage laissé libre par l'encoche 161. L'échappement de la vapeur présente dans l'élément de cuisson 100 par les encoches 161 peut ainsi être limité.

La figure 15 montre l'élément d'enceinte supérieur 190 en place sur l'élément de cuisson 100 en présence du panier de cuisson 110 et de l'élément de préhension 115. La partie inférieure de l'élément supérieur 190 est agencée en regard de la partie supérieure de l'encoche 161 laissée libre par l'élément de préhension 115. Ainsi l'élément de préhension 115 est susceptible de déplacer les éléments d'obturations 171 pour passer par les encoches 161 lorsque le panier de cuisson 110 est agencé dans l'élément de cuisson 100. Les deux bras 118, 119 prennent appui sur la languette élastique 170 de part et d'autre de la zone d'appui intermédiaire 172. Les organes de contrôle d'échappement de vapeur 117 peuvent favoriser la condensation et limiter l'échappement de vapeur.

L'utilisateur peut aisément retirer le panier de cuisson 110 ou l'autre panier de cuisson 120 en utilisant les organes de préhension 116.

Lorsque l'élément d'enceinte supérieur 190 et l'élément de préhension 115 sont retirés, les moyens de rappel élastique 175, 185 ramènent les éléments d'obturation 171 dans la position de la figure 12.

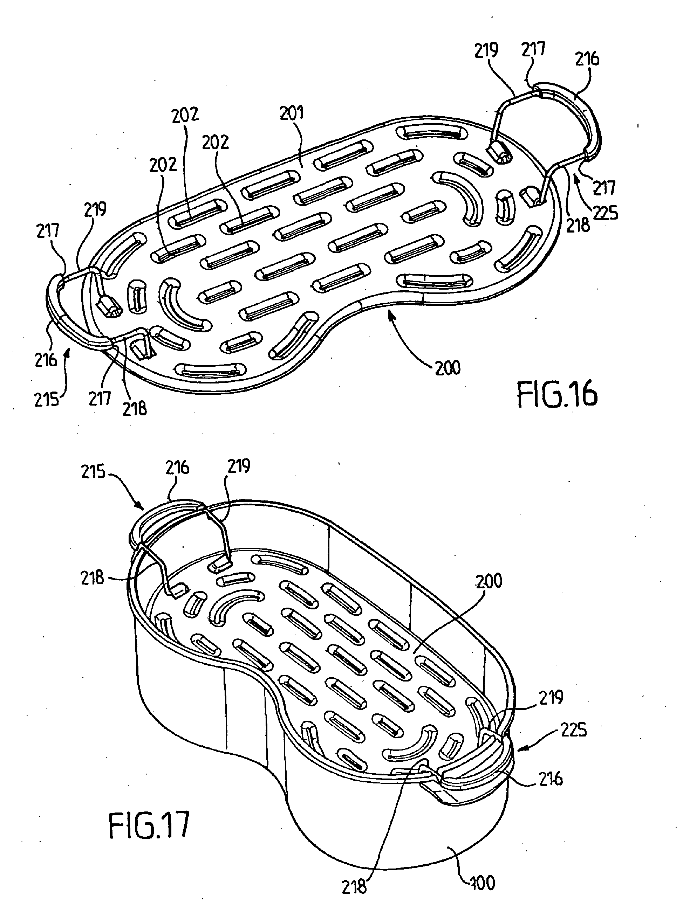

La figure 16 illustre un accessoire interne de cuisson 200 prévu pour être disposé dans l'élément de cuisson 100. L'accessoire interne de cuisson 200 présente une forme allongée adaptée à la forme de l'élément de cuisson 100. L'accessoire interne de cuisson 200 présente un élément de support 201. L'élément de support 201 forme une surface sensiblement plane. L'élément de support 201 est muni de perforations 202. Ainsi l'accessoire interne de cuisson 200 est ajouré. L'accessoire interne de cuisson 200 comprend un élément de préhension 215 et un autre élément de préhension 225. L'élément de préhension 215 et l'autre élément de préhension 225 sont montés pivotants sur l'accessoire interne de cuisson 200. Plus particulièrement, l'élément de préhension 215 et l'autre élément de préhension 225 sont montés pivotants sur le support 201. L'élément de préhension 215 et l'autre élément de préhension 225 comportent chacun un organe de préhension 216. Plus particulièrement, chaque élément de préhension 215 ; 225 comporte deux bras 218, 219. Les deux bras 218, 219 sont reliés par l'organe de préhension 216. L'élément de préhension 215 et l'autre élément de préhension 225 comportent des organes de contrôle d'échappement de vapeur 217. Les organes de contrôle d'échappement de vapeur 217 sont issus de l'organe de préhension 216.

La figure 17 illustre l'accessoire interne de cuisson 200 disposé dans l'élément de cuisson 100. Les organes de préhension 216 sont agencés à l'extérieur de l'élément de cuisson 100 lorsque l'accessoire interne de cuisson 200 est agencé dans l'élément de cuisson 100. L'élément de préhension 215 ou l'autre élément de préhension 225 est susceptible de déplacer l'un des éléments d'obturation 171 (visible sur les figures 6, 7 et 11) pour passer par l'encoche 161 ou par l'autre encoche 162 lorsque l'accessoire interne de cuisson 200 est agencé dans l'élément de cuisson 100.

Plus particulièrement, les deux bras 218, 219 de l'élément de préhension 215 ou de l'autre élément de préhension 225 s'étendent hors de l'élément de cuisson 100 lorsque l'accessoire interne de cuisson 200 est agencé dans l'élément de cuisson 100. Les deux bras 218, 219 prennent appui sur la languette élastique 170 correspondante (illustrée sur les figures 6 et 7) de part et d'autre de la zone d'appui intermédiaire 172.

Les organes de contrôle d'échappement de vapeur 217 sont disposés en regard de des encoches 161 ou des autres encoches 162 lorsque l'accessoire interne de cuisson 200 est agencé dans l'élément de cuisson 100. Les organes de contrôle d'échappement de vapeur 217 sont disposés à l'extérieur de l'élément de cuisson 100 lorsque l'accessoire interne de cuisson 200 est agencé dans l'élément de cuisson 100.

L'élément de cuisson 100 visible aux figures 4, 5, 10, 11 et 17, l'accessoire interne de cuisson 200 visible aux figures 16 et 17, et l'élément d'enceinte supérieur 190 visible sur les figures 14 et 15 appartiennent à un ensemble pour la cuisson à la vapeur, dans lequel la partie inférieure de l'élément d'enceinte supérieur 190 est agencée en regard de la partie supérieure de l'encoche 161 ou de l'autre encoche 162 laissée libre par l'élément de préhension 215 ou par l'autre élément de préhension 225, lorsque l'accessoire interne de cuisson 200 est agencé dans l'élément de cuisson 100.

A titre de variante, l'élément de préhension 115 ; 215 et/ou l'autre élément de préhension 125 ; 225 n'est pas nécessairement monté pivotant.

A titre de variante, l'élément de préhension 115 ; 215 et/ou l'autre élément de préhension 125 ; 225 ne comporte pas nécessairement deux bras. Le nombre d'encoches 161, 162 et/ou le nombre d'organes de contrôle d'échappement de vapeur 117 ; 217 peut notamment être diminué si l'élément de préhension 115 ; 215 et/ou l'autre élément de préhension 125 ; 225 ne comporte qu'un bras. L'élément d'obturation est alors associé à un moyen de rappel élastique pour obturer au moins partiellement l'encoche en l'absence de l'élément de préhension.

A titre de variante, l'élément de cuisson 100 pourrait présenter un fond plein pour être disposé sur une source de chaleur.

A titre de variante, les éléments d'obturation 171 pourraient être formés par une pièce élastomère, par exemple en silicone.

A titre de variante, le panier de cuisson 110 ou l'autre panier de cuisson 120 ne sont pas nécessairement ajourés.

A titre de variante, l'élément de cuisson 100 pourrait loger plus de deux paniers de cuisson, ou au contraire, un seul panier de cuisson. Le nombre d'encoches 161 est alors adapté au nombre de paniers de cuisson. Avantageusement, un ou plusieurs éléments d'obturation 171 sont montés sur l'élément de cuisson en regard d'au moins une partie de ladite ou desdites encoches, le ou les éléments de préhension étant susceptibles de déplacer le ou l'un des éléments d'obturation pour passer par la ou l'une desdites encoches lorsque le ou l'un des paniers de cuisson est agencé dans l'élément de cuisson.

A titre de variante, l'accessoire interne de cuisson 200 pourrait ne comporter qu'un seul élément de préhension 215.

La présente invention n'est nullement limitée à l'exemple de réalisation décrit et à ses variantes, mais englobe de nombreuses modifications dans le cadre des revendications.

## Revendications

1. Ensemble pour la cuisson à la vapeur, comportant un élément de cuisson (100), ainsi qu'un panier de cuisson (110) ou un accessoire interne de cuisson (200) disposé dans l'élément de cuisson (100), le panier de cuisson (110) ou l'accessoire interne de cuisson (200) comprenant un élément de préhension (115 ; 215) comportant un organe de préhension (116 ; 216) agencé à l'extérieur de l'élément de cuisson (100) lorsque le panier de cuisson (110) ou l'accessoire interne de cuisson (200) est agencé dans l'élément de cuisson (100), l'élément de cuisson (100) présentant une paroi latérale annulaire (102) dégageant une ouverture supérieure, la paroi latérale annulaire (102) présentant un bord supérieur annulaire (160) comportant au moins une encoche (161) prévue pour le passage de l'élément de préhension (115 ; 215) appartenant audit panier de cuisson (110) ou audit accessoire interne de cuisson (200), un élément d'obturation (171) étant monté sur l'élément de cuisson (100) en regard d'au moins une partie de ladite ou desdites encoches (161), **caractérisé en ce que** l'élément de préhension (115 ; 215) est susceptible de déplacer l'élément d'obturation (171) pour passer par ladite ou lesdites encoches (161) lorsque le panier de cuisson (110) ou l'accessoire interne de cuisson (200) est agencé dans l'élément de cuisson (100).

2. Ensemble pour la cuisson à la vapeur selon la revendication 1, **caractérisé en ce que** l'élément d'obturation (171) est agencé dans une gorge (163) du bord supérieur annulaire (160) de la paroi latérale annulaire (102).

3. Ensemble pour la cuisson à la vapeur selon l'une des revendications 1 ou 2, **caractérisé en ce que** l'élément d'obturation (171) est formé par une languette élastique (170) présentant une zone d'appui intermédiaire (172) avec l'élément de cuisson (100).

4. Ensemble pour la cuisson à la vapeur selon la revendication 3, **caractérisé en ce que** la languette élastique (170) est associée à une pièce ressort (180).

5. Ensemble pour la cuisson à la vapeur selon l'une des revendications 1 à 4, **caractérisé en ce que** l'élément de préhension (115 ; 215) comporte un ou plusieurs organes de contrôle d'échappement de vapeur (117 ; 217) disposés en regard de ladite ou desdites encoches (161) lorsque le panier de cuisson (110) ou l'accessoire interne de cuisson (200) est agencé dans l'élément de cuisson (100).

6. Ensemble pour la cuisson à la vapeur selon l'une des revendications 1 à 5, **caractérisé en ce que** le bord supérieur annulaire (160) comporte au moins une autre encoche (162) prévue pour le passage d'un autre élément de préhension (125 ; 225) appartenant à un autre panier de cuisson (120) ou à l'accessoire interne de cuisson (200) disposé dans l'élément de cuisson (100), des éléments d'obturations (171) étant montés sur l'élément de cuisson (100) en regard d'au moins une partie de ladite ou desdites autres encoches (162).

7. Ensemble pour la cuisson à la vapeur selon la revendication 6, **caractérisé en ce que** l'autre panier de cuisson (120) est disposé dans l'élément de cuisson (100) à côté du panier de cuisson (110).

8. Ensemble pour la cuisson à la vapeur, comportant un élément de cuisson (100), ainsi qu'un panier de cuisson (110) ou un accessoire interne de cuisson (200) disposé dans l'élément de cuisson (100), le panier de cuisson (110) ou l'accessoire interne de cuisson (200) comprenant un élément de préhension (115 ; 215) comportant un organe de préhension (116 ; 216) agencé à l'extérieur de l'élément de cuisson (100) lorsque le panier de cuisson (110) ou l'accessoire interne de cuisson (200) est agencé dans l'élément de cuisson (100), l'élément de cuisson (100) présentant une paroi latérale annulaire (102) dégageant une ouverture supérieure, la paroi latérale annulaire (102) présentant un bord supérieur annulaire (160) comportant au moins une encoche (161) prévue pour le passage de l'élément de préhension (115 ; 215) appartenant audit panier de cuisson (110) ou audit accessoire interne de cuisson (200), **caractérisé en ce que** l'élément de préhension (115 ; 215) comporte un ou plusieurs organes de contrôle d'échappement de vapeur (117 ; 217) disposés en regard de ladite ou desdites encoches (161) lorsque le panier de cuisson (110) ou l'accessoire interne de cuisson (200) est agencé dans l'élément de cuisson (100).

9. Ensemble pour la cuisson à la vapeur selon la revendication 8, **caractérisé en ce que** le ou les organes de contrôle d'échappement de vapeur (117 ; 217) sont disposés à l'extérieur de l'élément de cuisson (100) lorsque le panier de cuisson (110) ou l'accessoire interne de cuisson (200) est agencé dans l'élément de cuisson (100).

10. Ensemble pour la cuisson à la vapeur selon l'une des revendications 8 ou 9, **caractérisé en ce que** le ou les organes de contrôle d'échappement de vapeur (117 ; 217) sont issus de l'organe de préhension (116 ; 216).

11. Ensemble pour la cuisson à la vapeur selon l'une des revendications 1 à 10, **caractérisé en ce que** l'élément de préhension (115 ; 215) est monté pivotant sur le panier de cuisson (110) ou sur l'accessoire interne de cuisson (200).

12. Ensemble pour la cuisson à la vapeur selon l'une des revendications 1 à 11, **caractérisé en ce que** l'élément de préhension (115 ; 215) comporte deux bras (118, 119 ; 218, 219) s'étendant hors de l'élément de cuisson (100) lorsque le panier de cuisson (110) ou l'accessoire interne de cuisson (200) est agencé dans l'élément de cuisson (100).

13. Ensemble pour la cuisson à la vapeur selon la revendication 12, **caractérisé en ce que** les deux bras (118, 119 ; 218, 219) sont reliés par l'organe de préhension (116 ; 216).

14. Ensemble pour la cuisson à la vapeur selon l'une des revendications 3 ou 4 et selon l'une des revendications 12 ou 13, **caractérisé en ce que** les deux bras (118, 119 ; 218, 219) prennent appui sur la languette élastique (170) de part et d'autre de la zone d'appui intermédiaire (172).

15. Ensemble pour la cuisson à la vapeur, comportant un élément de cuisson (100), ainsi qu'un panier de cuisson (110) ou un accessoire interne de cuisson (200) disposé dans l'élément de cuisson (100), le panier de cuisson (110) ou l'accessoire interne de cuisson (200) comprenant un élément de préhension (115 ; 215) comportant un organe de préhension (116 ; 216) agencé à l'extérieur de l'élément de cuisson (100) lorsque le panier de cuisson (110) ou l'accessoire interne de cuisson (200) est agencé dans l'élément de cuisson (100), l'élément de cuisson (100) présentant une paroi latérale annulaire (102) dégageant une ouverture supérieure, la paroi latérale annulaire (102) présentant un bord supérieur annulaire (160) comportant au moins une encoche (161) prévue pour le passage de l'élément de préhension (115 ; 215) appartenant audit panier de cuisson (110) ou audit accessoire interne de cuisson (200), **caractérisé en ce que** l'élément de préhension (115 ; 215) est monté pivotant sur le panier de cuisson (110) ou sur l'accessoire interne de cuisson (200), **en ce que** le bord supérieur annulaire (160) de la paroi latérale annulaire (102) comporte deux encoches (161) prévues pour le passage de l'élément de préhension (115 ; 215), **en ce que** l'élément de préhension (115 ; 215) comporte deux bras (118, 119; 218, 219) s'étendant hors de l'élément de cuisson (100) lorsque le panier de cuisson (110) ou l'accessoire interne de cuisson (200) est agencé dans l'élément de cuisson (100), et **en ce que** les deux bras (118, 119 ; 218, 219) sont reliés par l'organe de préhension (116 ; 216).

16. Ensemble pour la cuisson à la vapeur selon l'une des revendications 1 à 15, **caractérisé en ce que** l'élément de cuisson (100) présente une partie inférieure (101) permettant le passage de la vapeur.

17. Ensemble pour la cuisson à la vapeur selon l'une des revendications 1 à 16, **caractérisé en ce que** le panier de cuisson (110) ou l'accessoire interne de cuisson (200) est ajouré.

18. Ensemble pour la cuisson à la vapeur selon l'une des revendications 1 à 17, comportant un élément d'enceinte supérieur (190) disposé sur l'élément de cuisson (100), **caractérisé en ce que** la partie inférieure dudit élément d'enceinte supérieur (190) est agencée en regard de la partie supérieure de l'encoche (161) laissée libre par l'élément de préhension (115 ; 215) lorsque le panier de cuisson (110) ou l'accessoire interne de cuisson (200) est agencé dans l'élément de cuisson (100).

19. Cuiseur vapeur électrique comprenant une base de production de vapeur (1), un élément de cuisson (100), un élément d'enceinte supérieur (190), ainsi qu'un panier de cuisson (110) ou un accessoire interne de cuisson (200) disposé dans l'élément de cuisson (100), **caractérisé en ce que** l'élément de cuisson (100), le panier de cuisson (110) ou l'accessoire interne de cuisson (200), et l'élément d'enceinte supérieur (190) appartiennent à un ensemble pour la cuisson à la vapeur selon la revendication 18.

## Claims

1. A steam cooking set, comprising a cooking element (100), and a cooking basket (110) or an inner cooking accessory (200) placed in the cooking element (100), the cooking basket (110) or the inner cooking accessory (200) comprising a grip element (115; 215) with a grip member (116; 216) provided outside the cooking element (100) when the cooking basket (110) or the inner cooking accessory (200) is placed in the cooking element (100), the cooking element (100) having an annular side wall (102) defining an upper opening, the annular side wall (102) having an annular upper rim (160) comprising at least one slot (161) provided for the passage of the grip element (115; 215) belonging to said cooking basket (110) or said inner cooking accessory (200), a closure element (171) being mounted on the cooking element (100) opposite at least one portion of said slot(s) (161), **characterised in that** the grip element (115; 215) can displace the closure element (171) to pass through said slot(s) (161) when the cooking basket (110) or the inner cooking accessory (200) is placed in the cooking element (100).

2. A steam cooking set according to claim 1, **characterised in that** the closure element (171) is arranged in a groove (163) of the annular upper rim (160) of the annular side wall (102).

3. A steam cooking set according to one of claims 1 or 2, **characterised in that** the closure element (171) is formed by an elastic tongue (170) having an intermediate bearing area (172) with the cooking element (100).

4. A steam cooking set according to claim 3, **characterised in that** the elastic tongue (170) is associated with a spring element (180).

5. A steam cooking set according to one of claims 1 to 4, **characterised in that** the grip element (115; 215) comprises one or more steam release control members (117; 217) arranged opposite said slot(s) (161) when the cooking basket (110) or the inner cooking accessory (200) is placed in the cooking element (100).

6. A steam cooking set according to one of claims 1 to 5, **characterised in that** the annular upper rim (160) comprises at least one slot (162) provided for the passage of another grip element (125; 225) belonging to another cooking basket (120) or to the inner cooking accessory (200) placed in the cooking element (100), closure elements (171) being mounted on the cooking element (100) opposite at least one portion of said other slot(s) (162).

7. A steam cooking set according to claim 6, **characterised in that** the other cooking basket (120) is placed in the cooking element (100) adjacent to the cooking basket (110).

8. A steam cooking set, comprising a cooking element (100), and a cooking basket (110) or an inner cooking accessory (200) placed in the cooking element (100), the cooking basket (110) or the inner cooking accessory (200) comprising a grip element (115; 215) with a grip member (116; 216) provided outside the cooking element (100) when the cooking basket (110) or the inner cooking accessory (200) is placed in the cooking element (100), the cooking element (100) having an annular side wall (102) defining an upper opening, the annular side wall (102) having an annular upper rim (160) containing at least one slot (161) provided for the passage of the grip element (115; 215) belonging to said cooking basket (110) or said inner cooking accessory (200), **characterised in that** the grip element (115; 215) comprises one or more steam release control members (117; 217) arranged opposite said slot(s) (161) when the cooking basket (110) or the inner cooking accessory (200) is placed in the cooking element (100).

9. A steam cooking set according to claim 8, **characterised in that** steam release control member(s) (117; 217) are arranged outside the cooking element (100) when the cooking basket (110) or the inner cooking accessory (200) is placed in the cooking element (100).

10. A steam cooking set according to one of claims 8 or 9, **characterised in that** the steam release control member(s) (117; 217) protrude from the grip member (116; 216).

11. A steam cooking set according to one of claims 1 to 10, **characterised in that** the grip element (115; 215) is pivotally mounted on the cooking basket (110) or on the inner cooking accessory (200).

12. A steam cooking set according to one of claims 1 to 11, **characterised in that** the grip element (115; 215) comprises two arms (118, 119; 218, 219) extending out of the cooking element (100) when the cooking basket (110) or the inner cooking accessory (200) is placed in the cooking element (100).

13. A steam cooking set according to claim 12, **characterised in that** the two arms (118, 119; 218, 219) are connected by the grip member (116; 216).

14. A steam cooking set according to one of claims 3 or 4 and according to one of claims 12 or 13, **characterised in that** the two arms (118, 119; 218, 219) bear on the elastic tongue (170) on either side of the intermediate bearing area (172).

15. A steam cooking set comprising a cooking element (100), and a cooking basket (110) or an inner cooking accessory (200) placed in the cooking element (100), the cooking basket (110) or the inner cooking accessory (200) comprising a grip element (115; 215) with a grip member (116; 216) provided outside the cooking element (100) when the cooking basket (110) or the inner cooking accessory (200) is placed in the cooking element (100), the cooking element (100) having an annular side wall (102) defining an upper opening, the annular side wall (102) having an annular upper rim (160) comprising at least one slot (161) provided for the passage of the grip element (115; 215) belonging to said cooking basket (110) or said inner cooking accessory (200), **characterised in that** the grip element (115; 215) is pivotally mounted on the cooking basket (110) or on the inner cooking accessory (200), **in that** the annular upper rim (160) of the annular side wall (102) comprises two slots (161) provided for the passage of the grip element (115; 215), **in that** the grip element (115; 215) comprises two arms (118, 119; 218, 219) extending out of the cooking element (100) when the cooking basket (110) or the inner cooking accessory (200) is placed in the cooking element (100), and **in that** the two arms (118, 119; 218, 219) are connected by the grip member (116; 216).

16. A steam cooking set according to one of claims 1 to 15, **characterised in that** the cooking element (100) has a lower portion (101) allowing the passage of steam.

17. A steam cooking set according to one of claims 1 to 16, **characterised in that** the cooking basket (110) or the inner cooking accessory (200) has an openwork design.

18. A steam cooking set according to one of claims 1 to 17, comprising an upper frame member (190) arranged on the cooking element (100), **characterised in that** the lower portion of said upper frame member (190) is arranged opposite the upper section of the slot (161) left free by the grip element (115; 215) when the cooking basket (110) or the inner cooking accessory (200) is placed in the cooking element (100).

19. An electric steam cooker comprising a steam generator base (1), a cooking element (100), an upper frame member (190), as well as a cooking basket (110) or an inner cooking accessory (200) placed in the cooking element (100), **characterised in that** the cooking element (100), the cooking basket (110) or the inner cooking accessory (200), and the upper frame member (190) belong to a steam cooking set according to claim 18.

## Patentansprüche

1. Dampfgareinheit, umfassend ein Garelement (100), sowie einen Garkorb (110) oder ein Gareinsatz-Zubehörteil (200), das im Garelement (100) angeordnet ist, wobei der Garkorb (110) oder das Gareinsatz-Zubehörteil (200) ein Greifelement (115; 215) mit einem Greiforgan (116; 216) umfassen, das außerhalb des Garelements (100) angeordnet ist, wenn sich der Garkorb (110) oder das Gareinsatz-Zubehörteil (200) im Garelement (100) befinden, wobei das Garelement (100) eine ringförmige Seitenwand (102) aufweist, die eine obere Öffnung freigibt, wobei die ringförmige Seitenwand (102) einen ringförmigen oberen Rand (160) aufweist, der mindestens eine Einkerbung (161) umfasst, die für den Durchlass des Greifelements (115; 215) vorgesehen ist, das dem Garkorb (110) oder dem Gareinsatz-Zubehörteil (200) angehört, wobei ein Verschlusselement (171) auf dem Garelement (100) gegenüber von mindestens einem Teil der Einkerbung oder der Einkerbungen (161) befestigt ist, **dadurch gekennzeichnet, dass** das Greifelement (115; 215) imstande ist, das Verschlusselement (171) zu verschieben, um durch die Einkerbung oder die Einkerbungen (161) hindurch zu verlaufen, wenn der Garkorb (110) oder das Gareinsatz-Zubehörteil (200) im Garelement (100) angeordnet ist.

2. Dampfgareinheit nach Anspruch 1, **dadurch gekennzeichnet, dass** das Verschlusselement (171) in einer Rille (163) des ringförmigen oberen Randes (160) der ringförmigen Seitenwand (102) angeordnet ist.

3. Dampfgareinheit nach einem der Ansprüche 1 oder 2, **dadurch gekennzeichnet, dass** das Verschlusselement (171) von einer elastischen Lasche (170) gebildet wird, die einen Zwischenauflagebereich (172) mit dem Garelement (100) aufweist.

4. Dampfgareinheit nach Anspruch 3, **dadurch gekennzeichnet, dass** die elastische Lasche (170) mit einem Federteil (180) verbunden ist.

5. Dampfgareinheit nach einem der Ansprüche 1 bis 4, **dadurch gekennzeichnet, dass** das Greifelement (115; 215) ein oder mehrere Dampfaustritts-Kontrollorgane (117; 217) umfasst, die gegenüber der Einkerbung oder den Einkerbungen (161) angeordnet sind, wenn sich der Garkorb (110) oder das Gareinsatz-Zubehörteil (200) im Garelement (100) befinden.

6. Dampfgareinheit nach einem der Ansprüche 1 bis 5, **dadurch gekennzeichnet, dass** der ringförmige obere Rand (160) mindestens eine andere Einkerbung (162) umfasst, die für den Durchlass eines anderen Greifelements (125; 225) vorgesehen ist, das einem anderen Garkorb (120) oder einem anderen Gareinsatz-Zubehörteil (200) angehört, das im Garelement (100) angeordnet ist, wobei Verschlusselemente (171) auf dem Garelement (100) gegenüber von mindestens einem Teil der anderen Einkerbung oder der anderen Einkerbungen (162) befestigt sind.

7. Dampfgareinheit nach Anspruch 6, **dadurch gekennzeichnet, dass** der andere Garkorb (120) im Garelement (100) neben dem Garkorb (110) angeordnet ist.

8. Dampfgareinheit, umfassend ein Garelement (100), sowie einen Garkorb (110) oder ein Gareinsatz-Zubehörteil (200), das im Garelement (100) angeordnet ist, wobei der Garkorb (110) oder das Gareinsatz-Zubehörteil (200) ein Greifelement (115; 215) mit einem Greiforgan (116; 216) umfassen, das außerhalb des Garelements (100) angeordnet ist, wenn sich der Garkorb (110) oder das Gareinsatz-Zubehörteil (200) im Garelement (100) befinden, wobei das Garelement (100) eine ringförmige Seitenwand (102) aufweist, die eine obere Öffnung freigibt, wobei die ringförmige Seitenwand (102) einen ringförmigen oberen Rand (160) aufweist, der mindestens eine Einkerbung (161) umfasst, die für den Durchlass des Greifelements (115; 215) vorgesehen ist, das dem Garkorb (110) oder dem Gareinsatz-Zubehörteil (200) angehört, **dadurch gekennzeichnet, dass** das Greifelement (115; 215) ein oder mehrere Dampfaustritts-Kontrollorgane (117; 217) umfasst, die gegenüber der Einkerbung oder den Einkerbungen (161) angeordnet sind, wenn sich der Garkorb (110) oder das Gareinsatz-Zubehörteil (200) im Garelement (100) befinden.

9. Dampfgareinheit nach Anspruch 8, **dadurch gekennzeichnet, dass** das oder die Dampfaustritts-Kontrollorgane (117; 217) außerhalb des Garelements (100) angeordnet sind, wenn sich der Garkorb (110) oder das Gareinsatz-Zubehörteil (200) im Garelement (100) befinden.

10. Dampfgareinheit nach einem der Ansprüche 8 oder 9, **dadurch gekennzeichnet, dass** das oder die Dampfaustritts-Kontrollorgane (117; 217) aus dem Greiforgan (116; 216) hervorgehen.

11. Dampfgareinheit nach einem der Ansprüche 1 bis 10, **dadurch gekennzeichnet, dass** das Greifelement (115; 215) schwenkbar auf dem Garkorb (110) oder dem Gareinsatz-Zubehörteil (200) befestigt ist.

12. Dampfgareinheit nach einem der Ansprüche 1 bis 11, **dadurch gekennzeichnet, dass** das Greifelement (115; 215) zwei Arme (118, 119; 218, 219) umfasst, die sich außerhalb des Garelements (100) erstrecken, wenn sich der Garkorb (110) oder das Gareinsatz-Zubehörteil (200) im Garelement (100) befinden.

13. Dampfgareinheit nach Anspruch 12, **dadurch gekennzeichnet, dass** die zwei Arme (118, 119; 218, 219) durch das Greiforgan (116; 216) verbunden sind.

14. Dampfgareinheit nach einem der Ansprüche 3 oder 4 und nach einem der Ansprüche 12 oder 13, **dadurch gekennzeichnet, dass** die zwei Arme (118, 119; 218, 219) auf beiden Seiten den Zwischenauflagebereichs (172) auf die elastische Lasche (170) drücken.

15. Dampfgareinheit, umfassend ein Garelement (100), sowie einen Garkorb (110) oder ein Gareinsatz-Zubehörteil (200), das im Garelement (100) angeordnet ist, wobei der Garkorb (110) oder das Gareinsatz-Zubehörteil (200) ein Greifelement (115; 215) mit einem Greiforgan (116; 216) umfassen, das außerhalb des Garelements (100) angeordnet ist, wenn sich der Garkorb (110) oder das Gareinsatz-Zubehörteil (200) im Garelement (100) befinden, wobei das Garelement (100) eine ringförmige Seitenwand (102) aufweist, die eine obere Öffnung freigibt, wobei die ringförmige Seitenwand (102) einen ringförmigen oberen Rand (160) aufweist, der mindestens eine Einkerbung (161) umfasst, die für den Durchlass des Greifelements (115; 215) vorgesehen ist, das dem Garkorb (110) oder dem Gareinsatz-Zubehörteil (200) angehört, **dadurch gekennzeichnet, dass** das Greifelement (115; 215) schwenkbar auf dem Garkorb (110) oder dem Gareinsatz-Zubehörteil (200) befestigt ist, **dadurch**, dass der ringförmige obere Rand (160) der ringförmigen Seitenwand (102) zwei Einkerbungen (161) umfasst, die für den Durchlass des Greifelements (115; 215) vorgesehen sind, **dadurch**, dass das Greifelement (115; 215) zwei Arme (118, 119; 218, 219) umfasst, die sich außerhalb des Garelements (100) erstrecken, wenn sich der Garkorb (110) oder das Gareinsatz-Zubehörteil (200) im Garelement (100) befinden, und **dadurch**, dass die zwei Arme (118, 119; 218, 219) durch das Greiforgan (116; 216) verbunden sind.

16. Dampfgareinheit nach einem der Ansprüche 1 bis 15, **dadurch gekennzeichnet, dass** das Garelement (100) einen unteren Teil (101) aufweist, der den Durchtritt des Dampfes ermöglicht.

17. Dampfgareinheit nach einem der Ansprüche 1 bis 16, **dadurch gekennzeichnet, dass** der Garkorb (110) oder das Gareinsatz-Zubehörteil (200) gelocht sind.

18. Dampfgareinheit nach einem der Ansprüche 1 bis 17, umfassend ein oberes Umwandungselement (190), das auf dem Garelement (100) angeordnet ist, **dadurch gekennzeichnet, dass** der untere Teil des oberen Umwandungselements (190) gegenüber dem oberen Teil der Einkerbung (161) angeordnet ist, der vom Greifelement (115; 215) frei gelassen wird, wenn sich der Garkorb (110) oder das Gareinsatz-Zubehörteil (200) auf dem Garelement (100) befinden.

19. Elektrischer Dampfgarer, umfassend einen Dampferzeugungssockel (1), ein Garelement (100), ein oberes Umwandungselement (190), sowie einen Garkorb (110) oder ein Gareinsatz-Zubehörteil (200), das im Garelement (100) angeordnet ist, **dadurch gekennzeichnet, dass** das Garelement (100), der Garkorb (110) oder das Gareinsatz-Zubehörteil (200) und das obere Umwandungselement (190) einer Dampfgareinheit nach Anspruch 18 angehören.
